# Europäisches Patentamt

## European Patent Office

## Office européen des brevets

(19)

(11) Veröffentlichungsnummer: **0 171 583**
**B1**

(12) # EUROPÄISCHE PATENTSCHRIFT

(45) Veröffentlichungstag der Patentschrift:
07.12.88

(51) Int. Cl.⁴: **B 01 J 8/06,** B 01 J 19/24,
C 01 B 3/26

(21) Anmeldenummer: **85108315.4**

(22) Anmeldetag: **05.07.85**

(54) Reaktionsrohrsystem eines Röhrenspaltofens.

(30) Priorität: **10.08.84 DE 3429522**

(43) Veröffentlichungstag der Anmeldung:
**19.02.86 Patentblatt 86/8**

(45) Bekanntmachung des Hinweises auf die Patenterteilung:
**07.12.88 Patentblatt 88/49**

(84) Benannte Vertragsstaaten:
**AT DE FR GB IT NL**

(56) Entgegenhaltungen:
**FR-A- 1 135 932**
**GB-A- 1 244 018**

(73) Patentinhaber: **Uhde GmbH, Friedrich-Uhde-Strasse 15, D-4600 Dortmund 1 (DE)**

(72) Erfinder: **Herbort, Hans-Joachim, Dipl.-Ing., Unnaer Strasse 65 b, D-5758 Fröndenberg (DE)**
Erfinder: **Severin, Manfred, Dipl.-Ing., Am Wiesenberge 23, D-5840 Schwerte-Geisecke (DE)**

ACTORUM AG

## Beschreibung

Die Erfindung betrifft ein Reaktionsrohrsystem eines Röhrenspaltofens zur indirekten Erhitzung von spaltbaren Medien, insbesondere für die katalytische Spaltung von Kohlenwasserstoffen wobei das System aus einer Vielzahl von Reaktionsrohren und Sammelleitungen besteht und die Reaktionsrohre über den Boden des Röhrenspaltofens hinausragen und mit niedrig-legierten Rohrabschnitten mittels Rundschweissnaht verlängert sind bis zur jeweiligen Sammelleitung und wobei die ausserhalb des Röhrenspaltofens liegenden Rohrsektionen innenisoliert sind. Vornehmlich richtet sie sich auf solche Röhrenspaltöfen, in denen die Spaltung bei hohen Drücken von 15 bar und mehr und bei hohen Temperaturen von 600°C und mehr durchgeführt wird.

Nach DE-G 1 542 530 ist ein Röhrenspaltofen bekannt, bei dem eine Mehrzahl von Reaktionsrohren mit jeweils einer Sammelleitung verbunden sind. Dabei liegen die innenisolierten Sammelleitungen unterhalb des Reaktionsofens. Die Reaktionsrohre aus hochwertigem Material sind ausserhalb des Bodens des Reaktionsofens verlängert bis zu den Sammelleitungen und von der Oberkante des Rohrbodens aus innenisoliert. Die Innenisolierung ermöglicht es, für die Verlängerung weniger hochwertiges Material zu verwenden, ja sogar unlegiertes Material einzusetzen. Die Verlängerungsstücke der Reaktionsrohre bis zu der jeweiligen Sammelleitung können sowohl Flanschrohrstücke sein, als auch eingeschweisste Rohrstücke.

Für diese druck- und temperaturbelasteten Rohrstücke ist die Einhaltung eines inneren bestimmten Temperaturprofils absolut notwendig, damit keine Überbelastung auftritt. Dies wird erreicht durch entsprechende Materialwahl und Dimensionierung der Innenisolierung. Die Innenisolierung wird so ausgelegt, dass die hohe Gastemperatur bis zur Innenwand des Verlängerungsrohrstückes auslegungsgemäss reduziert wird bei entsprechender Wärmeabgabe des Rohres an die Umgebungsluft. Diese Auslegung geht aus von bestimmten Innen- und Aussentemperaturen und Wärmedurchgangswerten.

Aufgetretene Korrosionsschäden an den Schweissnähten zwischen hochlegierten Rohrabschnitten und niedrig bzw. unlegierten Rohrabschnitten stellten die Aufgabe, diesen Mangel zu beseitigen.

Die Aufgabe wird erfindungsgemäss dadurch gelöst, dass die Reaktionsrohre im Bereich jeder Schweissnaht mit einem einseitig offenen koaxialen Schutzrohr mit freiem Ringraum zum Reaktionsrohr umgeben sind.

Die Erfindung lässt sich gemäss den kennzeichnenden Merkmalen der Unteransprüche dergestalt ergänzen, dass weitere Forderungen erfüllt werden.

Die mit der Erfindung erzielten Vorteile bestehen darin, dass mit einfachen Mitteln die Aussenfläche der ausserhalb des Spaltofens liegenden Reaktionsrohre vor unkontrollierbarem Wärmeabfluss geschützt ist bei Vermeidung einer Isolierung auf dem Reaktionsrohr. Durch das mit freiem Ringraum zum Reaktionsrohr angeordnete Schutzrohr wird sichergestellt, dass bei Betrieb des Spaltofens und voller Gastemperatur innerhalb der Innenisolierung genügend Wärme von der Aussenwand des ausserhalb des Spaltofens liegenden Reaktionsrohres abfliesst, bei extrement Witterungsverhältnissen aber keine Unterkühlung des Reaktionsrohres und der Schweissnähte auftreten kann. Es wird so stets sichergestellt, dass die Taupunkttemperatur der Spaltgase nicht erreicht bzw. unterschritten wird. Es kommt zwischen Innenisolierung und Innenwand nicht zur Kondensatbildung und damit zu korrosivem Angriff der Innenwand und der Schweissnähte.

Ein Ausführungsbeispiel der Erfindung mit den wesentlichen erfinderischen Merkmalen ist in der Zeichnung dargestellt und wird im folgenden näher beschrieben. Es zeigen:

Fig. 1: einen Teilschnitt durch ein aus mehreren Einzelrohren bestehendes Rohrsystem eines Steamreformers (stark vereinfacht).

Fig. 2: einen Schnitt durch ein Einzelrohr.

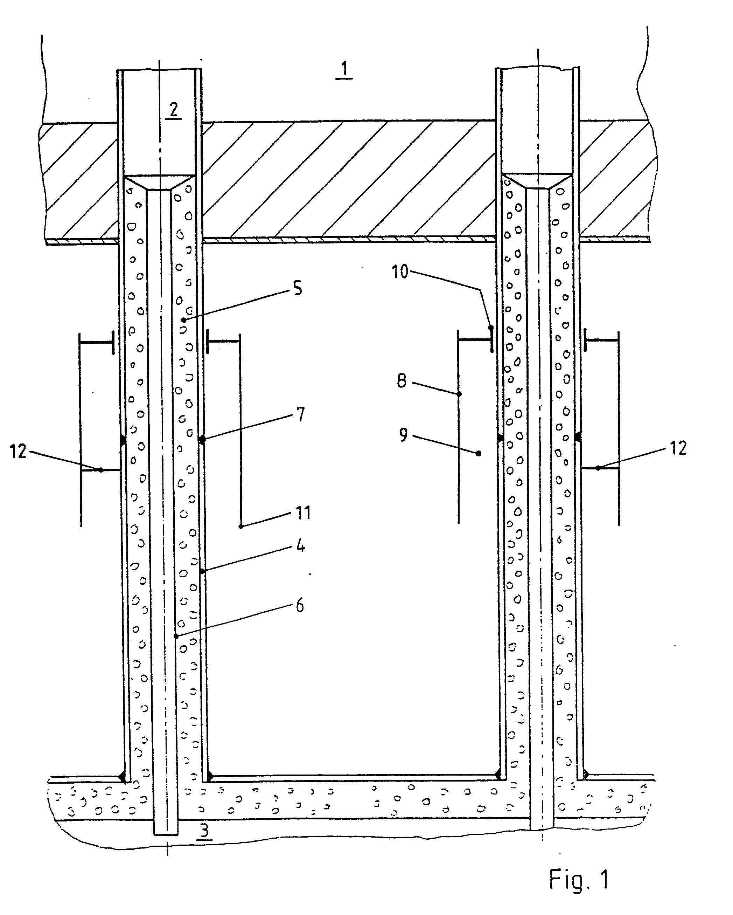

Gemäss Fig. 1 sind im Röhrenspaltofen 1 eine Vielzahl von Reaktionsrohren 2 derart angeordnet, dass die unteren Enden der Rohre in innenisolierten Sammelleitungen 3 münden. Das Reaktionsrohr 2 aus hochlegiertem, austenitischem Stahl ist ausserhalb des Röhrenspaltofens durch ein angeschweisstes, aus ferritischem Stahl bestehendes Zwischenrohr 4 verlängert bis in die Sammelleitung 3. Der untere Teil der Reaktionsrohre 2 und das Zwischenrohr 4 enthalten die Innenisolierung 5 und das heissgehende Innenrohr 6, durch das die ca. rund 730–920°C heissen Reaktionsgase in die Sammelleitung 3 strömen. Um den Bereich der Schweissnaht 7 vor übermässiger Wärmeableitung zu schützen wird das Reaktionsrohr an dieser Stelle mit dem Schutzrohr 8 umgeben unter Gewährung eines freien Ringraumes 9. Das Schutzrohr 8 ist oben im Bereich des unteren Teils des Reaktionsrohres 2 geschlossen und durch eine Hülse 10 verschiebbar bzw. arretierbar am Reaktionsrohr angeordnet. Unten ist das Schutzrohr 8 offen. Seine Länge ist so bemessen, dass der untere offene Schutzrohrrand 11 ein beträchtliches Mass unterhalb der Schweissnaht 7 endet. Um bei jeder Länge des Schutzrohres 8 überall gleichen Abstand zum Reaktionsrohr 2 und zum Zwischenrohr 4 zu gewährleisten kann das Schutzrohr innen Distanzhalter 12 erhalten, die jedoch eine freie Luftzirkulation innerhalb des freien Ringraumes 9 gewährleisten müssen.

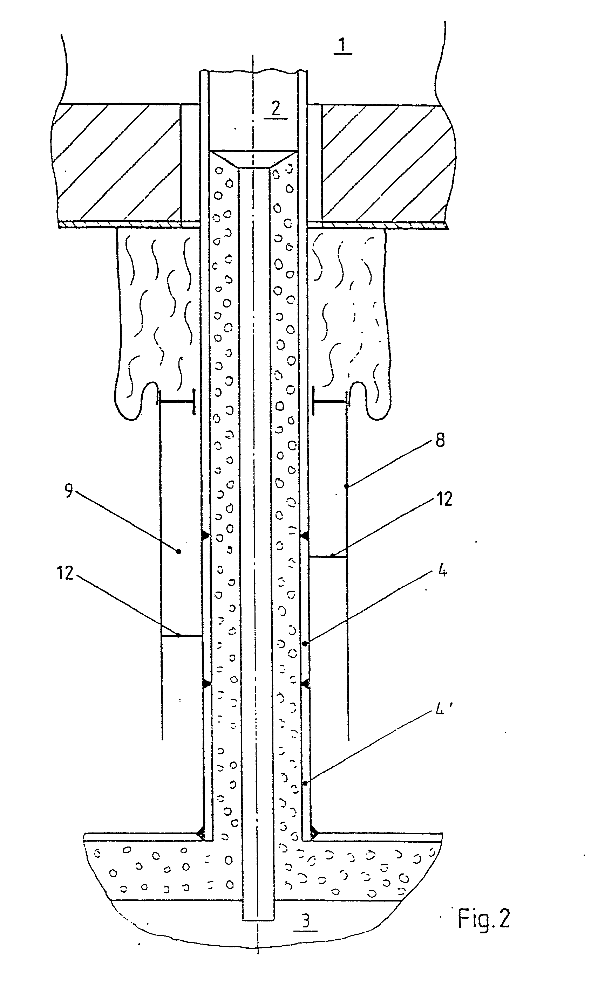

Gemäss Fig. 2 kann das Reaktionsrohr 2 auch mit zwei Zwischenrohren 4 und 4' verlängert werden bis in die Sammelleitung 3. Demzufolge besteht das Zwischenrohr 4 aus ferritischem Stahl und das zweite Zwischenrohr 4' aus unlegiertem Stahl. Die Mischschweissnähte zwischen diesen drei Rohrabschnitten, austenitisch-ferritisch und ferritisch-unlegiert, werden durch ein entsprechend langes Schutzrohr 8 vor übermässiger Wärmeableitung geschützt. Auch hier sind dann Distanzhalter 12 im Schutzrohr vorgesehen, um auf seiner ganzen Länge einen gleichmässigen freien Ringraum 9 zum Reaktionsrohr zu gewährleisten.

In Variationen zum oben Dargelegten können auch zwei oder mehrere Reaktionsrohre von einem gemeinsamen Schutzrohr umgeben werden.

## Patentansprüche

1. Reaktionsrohrsystem eines Röhrenspaltofens zur indirekten Erhitzung von spaltbaren Medien, insbesondere für die katalytische Spaltung von Kohlenwasserstoffen, wobei das System aus einer Vielzahl von Reaktionsrohren und Sammelleitungen besteht und die Reaktionsrohre über den Boden des Röhrenspaltofens hinausragen, und mit niedrig-legierten Rohrabschnitten mittels Rundschweissnaht verlängert sind bis zur jeweiligen Sammelleitung und wobei die ausserhalb des Röhrenspaltofens liegenden Rohrsektionen innenisoliert sind, dadurch gekennzeichnet, dass die Reaktionsrohre (2) im Bereich der Schweissnaht (7) bzw. Schweissnähte (7) mit einem einseitig offenen koaxialen Schutzrohr (8) mit freiem Ringraum (9) zum Reaktionsrohr umgeben sind.

2. Reaktionsrohrsystem nach Anspruch 1, dadurch gekennzeichnet, dass die Schutzrohre (8) mit ihrem oberen Ende gasdicht am Reaktionsrohr (2) anliegen.

3. Reaktionsrohrsystem nach Anspruch 1 und 2, dadurch gekennzeichnet, dass innerhalb der Schutzrohre (8) Distanzhalter (12) angeordnet sind.

4. Reaktionsrohrsystem nach Anspruch 1 und 3, dadurch gekennzeichnet, dass die einseitig geschlossenen Schutzrohre (8) auf den Reaktionsrohren längs verschiebbar sind.

## Claims

1. Reaction tube system of a steam reformer for the indirect heating of cracking feedstock, particularly for the catalytic cracking of hydrocarbons, the system comprising a plurality of reaction tubes and headers, the tubes penetrating through the bottom of the steam reformer and being extended to the associated header by low-alloy tube sections attached to them by circumferential welds, the tubes section located outside the steam reformer being provided with internal insulation, characterized in that in the area of weld (7) or welds (7) the reaction tubes (2) are surrounded by a coaxial protective tube (8) having one open end and providing for a free annular space (9) around the reaction tube.

2. Reaction tube system according to Claim 1, characterized in that the upper end of protective tube (8) is in gastight contact with reaction tube (2).

3. Reaction tube system according to Claims 1 and 2, characterized in that spacers (12) are arranged within protective tube (8).

4. Reaction tube system according to Claims 1 and 3, characterized in that the protective tube (8) having one closed end is displaceable in a longitudinal direction along the reaction tube.

## Revendications

1. Système de tubes de réaction d'un four de craquage à tubes pour le chauffage indirect de milieux aptes au craquage, en particulier pour le craquage d'hydrocarbures par voie catalytique, étant entendu que le système comporte une multitude de tubes de réaction et de carneaux collecteurs et que les tubes de réaction dépassent de la sole du four de craquage et sont prolongés respectivement jusqu'aux carneaux collecteurs par des tronçons de tube en matériau faiblement allié et fixés par un cordon de soudure circulaire, et que les tronçons de tube disposés à l'extérieur du four de craquage sont calorifugés à l'intérieur, système, caractérisé en ce que, dans la zone de la soudure (7) ou des soudures (7), les tubes de réaction (2) sont entourés d'un tube protecteur coaxial (8) ayant une ouverture latérale et laissant un espace annulaire libre (9) autour du tube de réaction.

2. Système de tubes de réaction selon la revendication 1, caractérisé en ce que l'extrémité supérieure des tubes protecteurs (8) est en contact avec le tube de réaction (2) de manière étanche aux gaz.

3. Système de tubes de réaction selon les revendications 1 et 2, caractérisé en ce que des écarteurs (12) sont disposés à l'intérieur des tubes protecteurs (8).

4. Système de tubes de réaction selon les revendications 1 et 3, caractérisé en ce que les tubes protecteurs fermés d'un côté (8) peuvent être déplacés le long de tubes de réaction.

Fig. 1

Fig.2